# EUROPÄISCHE PATENTANMELDUNG

(11) **EP 0 795 994 A2**
(43) Veröffentlichungstag der Anmeldung: **17.09.1997**
(21) Anmeldenummer: 97103873.2
(22) Anmeldetag: 07.03.1997
(51) Int. Cl.: H04M 11/00

(54) **Verfahren zur Bereitstellung eines Kabelsystems im Hausbereich**

(30) Priorität: 14.03.1996 DE 19610068
(71) Anmelder: SIEMENS AKTIENGESELLSCHAFT, 80333 München (DE)
(72) Erfinder: Schicketanz, Dieter, Dr., 82194 Gröbenzell (DE); Mohr, Stefan, 80687 München (DE)

(57) **Zusammenfassung**

Im privaten Hausbereich hat die Vielfalt an Kommunikations - und Informationsdiensten dazu geführt, daß gegebenenfalls für jeden Dienst eine eigene dienstespezifische Verkabelung möglicherweise vorzusehen ist. Die Erfindung schafft hier Abhilfe, indem eine sternförmige Verlegung der Kabelsysteme vom Übergabepunkt am Haus zu den Zimmerabschlußdosen aller relevanter Räume vorgenommen wird. Damit ist der Vorteil verbunden, daß ein universelles und flächendeckendes Kabelsystem im privaten Hausbereich installiert ist.

## Beschreibung

Die Erfindung betrifft ein Verfahren gemäß dem Oberbegriff des Patentanspruchs 1.

Die moderne Telekommunikationstechnik hat dazu geführt, daß eine Vielzahl von Diensten zur Kommunikation und Information auch im privaten Hausbereich bereitgestellt werden. Beispiele hierfür sind Telefon, Kabelfernsehen, Satellitenempfang oder Datenübertragungen. Diese Dienste werden über jeweils gesonderte Verbindungsstrecken an einen Übergabepunkt am Haus geführt, der einen physikalischen und logischen Abschluß dieser öffentlichen Kabelnetze zum Haus darstellt. Vom Übergabepunkt aus werden dann Kabelsysteme im Haus verlegt und in den in Frage kommenden Räumen Zimmerabschlußdosen zugeführt. Im privaten Hausbereich hat nun diese Vielfalt an Diensten dazu geführt, daß gegebenenfalls für jeden Dienst eine eigene dienstespezifische Verkabelung vorzusehen ist.

So sind im privaten Hausbereich Telefonkabel für private Telefonanlagen vorhanden. Der Anschluß von Kabelfernsehen erfordert jedoch ein zusätzliches Kabelsystem zum Heranführen der Programme an ein oder mehrere Fernsehendgeräte, da die vorhandenen Telefonkabel hierfür nicht genutzt werden können. Die Nutzung weiterer Dienste erfordert gegebenenfalls weitere zusätzliche Kabelsysteme, wodurch die Übersichtlichkeit nicht mehr sichergestellt ist. Außerdem müssen demjeweiligen Kabelsystem entsprechende Kabeltypen für Reparaturfälle bereitgehalten werden, um beispielsweise als Ersatzkabel im Fehlerfall verwendet werden zu können.

Ein weiterer gravierender Nachteil dieses Standes der Technik besteht darin, daß manche Kabelsysteme busförmige Strukturen aufweisen. Insbesondere sind hier die Koaxialkabelsysteme für Kabelfernsehanwendungen zu nennen. Dies bedeutet, daß an das vom Übergabepunkt ausgehende Kabelsystem Zimmerabschlußdosen bzw.Endgeräte in Reihe angeschlossen sind. Dies hat den Nachteil, daß an jeder der Zimmerabschlußdosen Leistungsverluste auftreten.

Der Erfindung liegt die Aufgabe zugrunde, im privaten Hausbereich Kabelsysteme bereitzustellen, die die obengenannten Nachteile vermeidet.

Die Erfindung wird ausgehend vom Oberbegriff des Patentanspruchs 1 durch dessen kennzeichnende Merkmale gelöst.

Vorteilhaft an der Erfindung ist insbesondere,daß eine sternförmige Verlegung der Kabelsysteme vom Übergabepunkt zu den Zimmerabschlußdosen aller relevanter Räume des Hauses vorgenommen wird. Damit ist der Vorteil verbunden, daß lediglich ein universelles und flächendeckendes Kabelsystem im privaten Hausbereich installiert werden muß.

Weitere Ausgestaltungen der Erfindung sind in den Unteransprüchen angegeben:

Gemäß Anspruch 2 ist vorgesehen, daß hinter dem wenigstens einen Übergabepunkt eine zentrale Steuereinrichtung vorgesehen wird. Damit ist der Vorteil verbunden, daß eine Vielzahl von Funktionen zentral hier verwaltet werden können.

Gemäß Anspruch 3 ist vorgesehen, daß die zentrale Steuereinrichtung als Verstärkereinrichtung ausgebildet ist. Damit ist der Vorteil verbunden, daß die zentrale Steuereinrichtung lediglich eine passive Funktion aufweist, indem die Dienste vom Übergebepunkt den Abschlußvorrichtungen zugeführt werden. Die Verstärkung der betreffenden Signale soll dabei nicht als aktive Komponente gelten.

Gemäß Ansprüch 4 ist vorgesehen, daß die zentrale Steuereinrichtung als Set-Top-Box ausgebildet ist. Damit ist der Vorteil verbunden, daß diese funktional allen Fernsehendgeräten zugeordnet ist und somit lediglich einmal im Haus vorzusehen ist. Damit ist in der Praxis ein wirtschaftlicher Vorteil verbunden.

Gemäß Anspruch 5 ist vorgesehen, daß zentrale Steuereinrichtung mit einer Empfangsvorrichtung versehen ist.Damit ist der Vorteil verbunden, daß diese funktional allen Fernsehendgeräten zugeordnet ist und somit lediglich einmal im Haus vorzusehen ist. Die Ausbildung der Fernsehendgeräte beschränkt sich somit im wesentlichen auf die Bildröhre, womit ein weiterer wirtschaftlicher Vorteil verbunden ist.

Gemäß Anspruch 6 ist vorgesehen, daS die Abschlußvorrichtungen mit modularer Anschlußtechnik aufgebaut sind. Damit ist der Vorteil verbunden, daß je nach Bedarf Anschlüsse flexibel gesetzt werden können.

Gemäß Anspruch 7 ist vorgesehen, daß das Kabelsystem vorzugsweise aus symmetrischen 100 Ω - Kabeln ausgebildet ist. Damit ist der Vorteil verbunden, daß derart ausgebildete Kabel am Markt in großer Stückzahl preisgünstig zu haben sind, da derartige Kabel bei LAN Netzen (Local area network) eingesetzt werden. Im übrigen liegen aufgrund der häufigen Verwendung große Erfahrungen mit dieser Technik vor.

Gemäß Anspruch 8 ist vorgesehen, daß dem Kabelsystem über die Abschlußvorrichtungen Informationen bezüglich Zustand und/oder Zustandsänderungen von häuslichen Einrichtungen zugeführt werden. Damit ist der Vorteil verbunden, daß das Kabelsystem auch zur Übertragung von Alarmen oder Informationen anderer Sicherheitsüberwachungseinrichtungen (Videoüberwachung) herangezogen werden kann.

Die Erfindung wird im folgenden anhand eines Ausführungsbeispieles näher erläutert.

Es zeigen
- Figur 1: den Übergabepunkt einer Mehrzahl von extern herangeführten Diensten,
- Figur 2: die Ausbildung des Kabelsystems im privaten Hausbereich,
- Figur 3a: eine erste erfindungsgemäße Ausführungsform
- Figur 3b: eine zweite erfindungsgemäße Ausführungsform
- Figur 3c: eine dritte erfindungsgemäße Ausführungsform

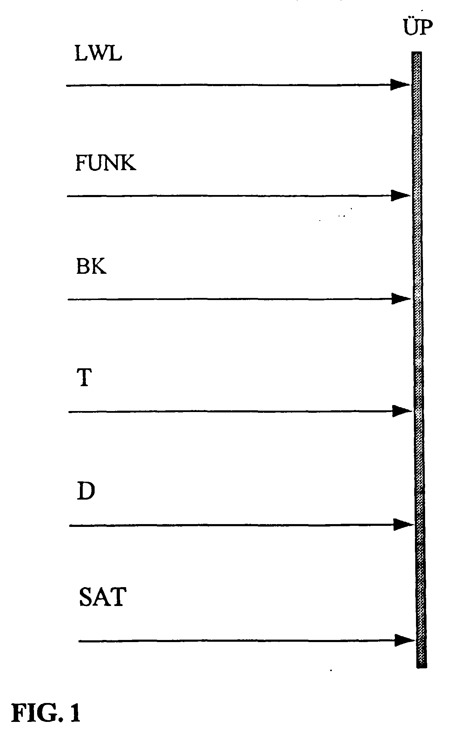

Gemäß Fig. 1 ist ein am Haus befindliche Übergabepunkt ÜP aufgezeigt. Dabei werden die Dienste über gegebenfalls sich unterscheidende Verbindungsstrecken dem Übergabepunkt ÜP zugeführt. Dieser bildet für die verschiedene Dienste am Haus einen logischen und physikalischen Abschlußpunkt. Gemäß Fig.1 werden als ankommende Verbindungsstrecken Lichtwellenleiter LWL, Telefonkabel T (a/b Ader), Datenkabel D, Breitbandkoaxkabel BK sowie Verbindungsstrecken FUNK, SAT aufgezeigt. Die Verbindungsstrecken FUNK sollen dabei Verbindungen zu einer Funkvorrichtung darstellen, während die Verbindungsstrecken SAT Verbindungen zu einer Satellitenanlage repräsentieren.

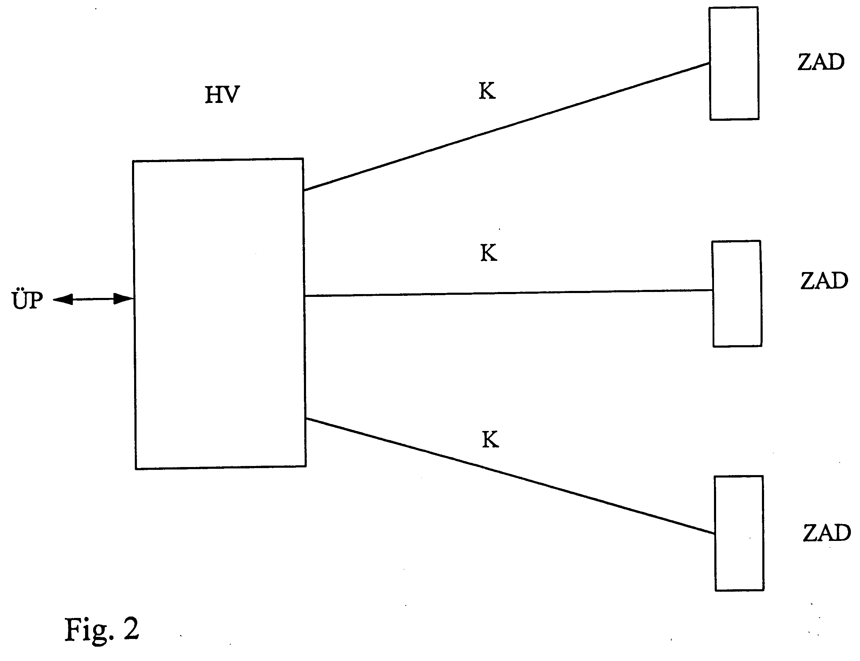

In Fig. 2 ist die prinzipielle Vorgehensweise der Bereitstellung eines Kabelsystems K offenbart. Dabei wird der Übergabepunkt ÜP über eine Verbindungsleitung ÜPHV mit dem Hausverteiler HV verbunden. Vom Hausverteiler HV werden die Kabelsysteme K jeweils zu als Abschlußvorrichtungen ausgebildeten Zimmeranschlußdosen ZAD geführt. Diese sind in den in Frage kommenden Räumen des privaten Hausbereichs vorgesehen. Damit ergibt sich eine sternförmige Sruktur des Kabelsystems K, da lediglich eine Zimmerabschlußdose ZAD als Abschluß des betreffenden Kabels dient. Der Nachteil des Auftretens von Leistungsverlusten ist damit vermieden. Die Kabelsysteme K werden jeweils von einem dieser kleineren Verteilersysteme zu den Zimmeranschlußdosen ZAD geführt. Der Vorteil einer derartigen Konfiguration liegt in der Bereitstellung eines universellen, flächendackenden Kabelsystems.

Als Kabel werden vorzugsweise symmetrische 100 Ω - Kabel verwendet, die im LAN Bereich sehr verbreitet sind. Diese Kabelsysteme können durch die entsprechende Anschlußtechnik derart eingesetzt werden, daß auf Koaxialkabel betriebene Übertragungsverfahren wie beispielsweise Fernsehen, Rundfunk verteilt werden können.

Die Zimmeranschlußdosen ZAD können in modularer bzw. nicht modularer Technik ausgebildet sein. Für letztere spricht insbesondere die größere Flexibilität hinsichtlich der empfangenen Kommunikationsdienste. Falls Doppelsternviererkabel oder PiMF-Kabel eigesetzt werden, können Doppel - bis Vierfacheinsätze verwendet werden. Damit können dann mehrere unterschiedliche Dienste an einer Zimmeranschlußdose ZAD zur Verfügung gestellt werden. Die erforderliche elektrische und mechanische Anpassung wird bei der modularen Technik mit dem in Frage kommenden Einsatzelement und bei der nicht modularen Technik mit der Anschlußschnur realisiert.

Im folgenden werden spezielle Ausgestaltungen der erfindungsgemäßen Vorgehensweise offenbart. Dabei soll die Erfindung insbesondere am Beispiel von Kabelfernsehanwendungen erläutert werden:

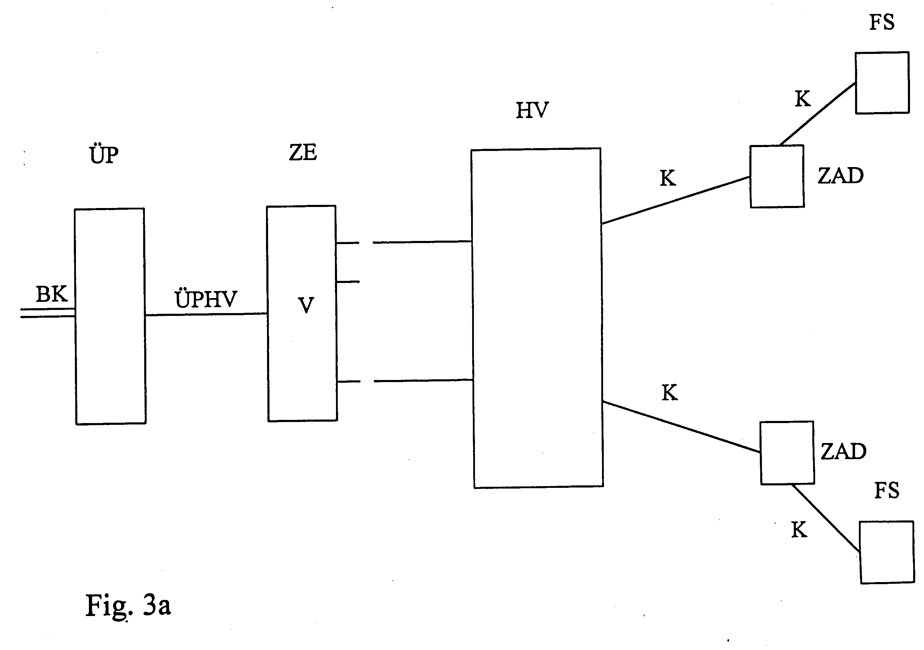

In Fig. 3a ist eine erste Ausgestaltung aufgezeigt. Hiernach wird das zur Übertragung von Kabelfernsehen verwendete Breitbandkabel BK am Übergabepunkt ÜP übergeben. Unmittelbar hinter dem Übergabepunkt ÜP wird in die Verbindungsleitung ÜPHV eine lediglich als Verstärkervorrichtung V ausgebildete zentrale Steuervorrichtung ZE eingefügt. Hier werden die ankommenden Kanäle des Kabelfernsehens verstärkt und über eine Mehrzahl von Ausgängen dem Hausverteiler HV zugeführt. Letzterer überträgt die Kanäle über die in Frage kommenden Kabel des Kabelsystemes zu den Zimmeranschlußdosen ZAD, wo gegebenenfalls Fernsehendgeräte FS angeschaltet sind. Bei einer. derartigen Verkabelung können somit alle am Übergabepunkt ÜP ankommenden Kanäle einem Fernsehendgerät FS zugeführt werden. Die Auswahl des entsprechenden Kanals erfolgt dabei direkt am Fernsehendgerät FS, wie dies beim gegenwärtigen Stand der Technik auch möglich ist. Wesentlich hierbei ist, daß die zentrale Steuervorrichtung ZE lediglich die Funktion einer Verstärkervorrichtung V aufweist. Der Vorteil einer derartigen Konfiguration liegt im Falle der Ausbildung der Steuereinrichtung ZE als Verstärkereinrichtung V in der Verwendung alter Fernsehendgeräte FS. Insofern bietet sich eine derartige Lösung als Übergangslösung an.

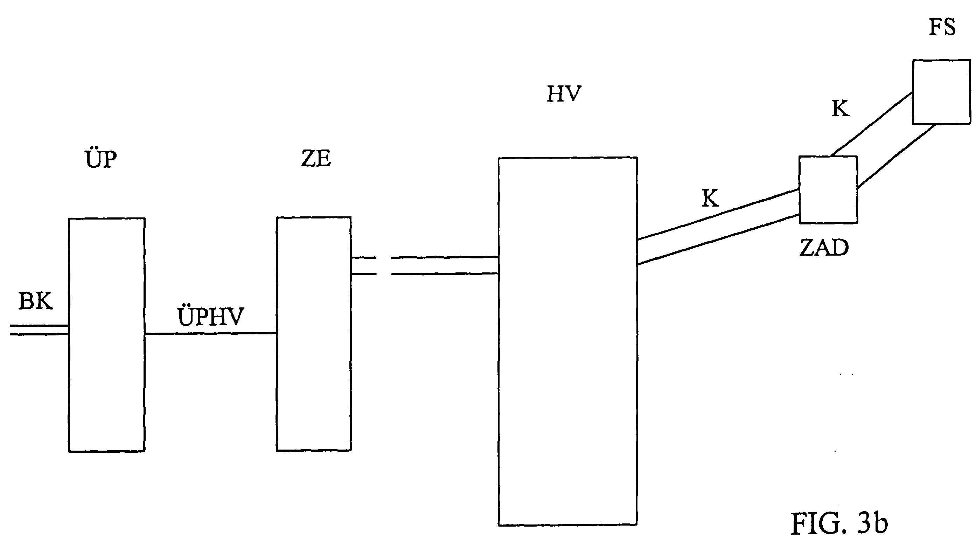

Gemäß Fig. 3b ist eine zusätzliche Ausbildung vorgesehen. Demnach wird vorgesehen, daß die zentrale Steuervorrichtung ZE als Set-Top-Box ausgebildet ist. Wesentlich hieran ist, daS zwischen der zentralen Set-Top-Box und dem Fernsehendgerät FS ein breitbandiger Hin- sowie ein schmalbandiger Rückkanal vorgesehen wird. Damit können Steuerungen am Fernsehendgerät FS über den schmalbandigen Rückkanal des Kabelsystem K und den Hausverteiler HV zur zentralen Set-Top-Box hin übertragen werden. Dort erfolgt dann die Auswahl des gewünschten Kanals. Mit einer derartigen Konfiguration wird erreicht, daS lediglich ein Kanal zum Fernsehendgerät FS hin übertragen wird, da die entsprechende Vorauswahl bereits in der zentralen Set-Top-Box vorgenommen wurde. Insofern können dann über die öffentlichen Verbindungsstrecken deutlich mehr (viele 100) Kanäle am Hausverteiler HV angeboten werden, als dies gegenwärtig beim Stand der Technik (ca.30) der Fall ist. Die Beschränkung der Bandbreite findet hier keine Anwendung. Ein weiterer Vorteil einer derartigen Konfiguration liegt in der zentralen Verwendung der Set-Top-Box, die nun nicht mehr im Fernsehendgerät FS vorgesehen zu werden braucht. Damit ist ein wirtschaftlicher Vorteil erreicht, da lediglich eine Set-Top-Box für eine Mehrzahl von Fernsehendgeräten FS Verwendung findet.

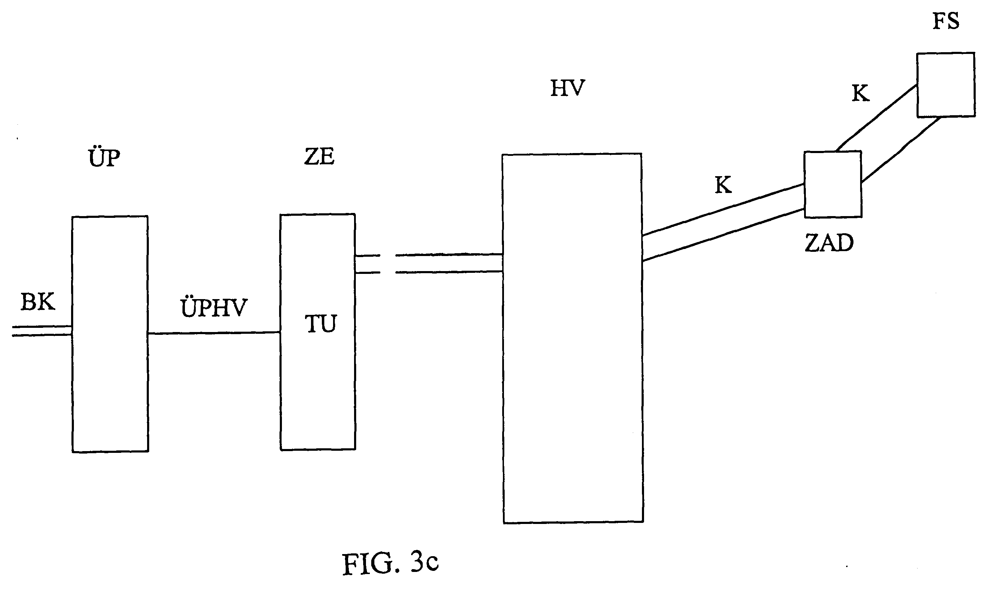

Gemäß Fig. 3c ist eine weitere zusätzliche Ausbildung der Erfindung vorgesehen. Hiernach wird die zentrale Steuereinrichtung ZE zusätzlich zu der Set-Top-Box mit einer zentralen Empfangsvorrichtung TU versehen. Diese Empfangsvorrichtungen TU sind beim Stand der Technik als Tuner ausgebildet und Bestandteil eines jeden Fernsehendgerätes FS. Damit ist ein weiterer wirtschaftlicher Vorteil verbunden, da in der zentralen Steuereinrichtung ZE lediglich eine als Tuner ausgebildete Empfangseinrichtung TU für alle Fernsehendgeräte FS vorzusehen ist. Diese Tuner müssen somit nicht mehr im Fernsehendgerät FS selbst eingesetzt werden.

Als weitere Ausbildung ist vorgesehen, daß ein derart ausgebildetes Kabelsystem K zur Übertragung von Alarmen vorzusehen ist. In diesem Fall werden entsprechende Sensoren z.B. Wasser-, Gas-, Rauch -oder Feuermelder an die zugeordneten Zimmeranschlußdosen ZAD angeschlossen. Über den schmalbandigen Rückkanal erfolgt dann die Übertragung der entsprechenden Informationen zur zentralen Steuereinrichtung ZE hin, wo gegebenenfalls eine weitere Verarbeitung dieser Informationen vorgenommen wird. Es können auch weitere Dienste wie z.B. zur Videoüberwachung, Gebäudetechnik oder Fernwirkeinrichtungen angeschlossen werden.

Abschließend sei darauf noch hingewiesen, daß das vorstehende Ausführungsbeispiel lediglich die Verkabelung im privaten Hausbereich angesprochen hat. Es sei jedoch noch darauf hingewiesen, daß eine derartige Vorgehensweise ebenso im Klein-Geschäftsbetrieb sowie in Mehrfamilienhäusern Anwendung finden kann.

Weiterhin wurde insofern von idealisierten Voraussetzungen ausgegangen, als daß vorausgesetzt wurde, daß die Verkabelung im Hausbereich vollkommen neu durchgeführt wird. Dies ist insofern keine ganz praxisgerechte Lösung, als daß es viele Gebäude wie beispielsweise Mietwohnungen gibt, wo eine vollkommene Neuverkabelung nur mit hohem Aufwand durchzuführen ist. In diesem Fall wird die busförmige Struktur beibehalten und eine Lösung gemäß Fig. 3c angestrebt. Dies bedeutet, daß eine zentrale Empfangseinrichtung TU und eine zentrale Set-Top-Box vorzusehen ist. Der Teilnehmer kann dann über den schmalbandigen Rückkanal jeweils einen Kanal auswählen, der dann über den breitbandigen Hinkanal zum Teilnehemer hin übertragen wird. Bei z.B. 20 Kanälen können somit 10 Haushalte mit jeweils 2 Fernsehendgeräten FS versorgt werden. Bei größeren Wohneinheiten muß dann das Gebäude in Einheiten wie z.B. Stockwerke aufgeteilt werden, um eine Überlastung des Kabelsystems zu vermeiden.

## Patentansprüche

1. Verfahren zur Bereitstellung eines Kabelsystems im Hausbereich,
mit einer Mehrzahl von Informationen führenden Diensten, die über wenigstens einen Übergabepunkt (ÜP) dem häuslichen Bereich zugeführt werden,wo sie über gegebenenfalls sich unterscheidende Kabelsysteme über Abschlußvorrichtungen (ZAD) mit einer weiteren Mehrzahl von Endgeräten (FS) verbunden sind,
**dadurch gekennzeichnet,**
daß von dem wenigstens einen Übergabepunkt (ÜP) ein Kabelsystem (K) sternförmig zu den Abschlußvorrichtungen (ZAD) der betreffenden Räume hin geführt wird.

2. Verfahren nach Anspruch 1,
**dadurch gekennzeichnet,**
daß hinter dem wenigstens einen Übergabepunkt (ÜP) eine zentrale Steuereinrichtung (ZE) vorgesehen wird.

3. Verfahren nach Anspruch 2,
**dadurch gekennzeichnet,**
daß die zentrale Steuereinrichtung (ZE) als Verstärkereinrichtung (V) ausgebildet ist.

4. Verfahren nach Ansprüch 2,
**dadurch gekennzeichnet,**
daß die zentrale Steuereinrichtung (ZE) als Set-Top-Box ausgebildet ist.

5. Verfahren nach Anspruch 2,
**dadurch gekennzeichnet,**
daß zentrale Steuereinrichtung (ZE) mit einer Emfangsvorrichtung (TU) versehen ist.

6. Verfahren nach Anspruch 1,
**dadurch gekennzeichnet,**
daß die Abschlußvorrichtungen (ZAD) mit modularer Anschlußtechnik aufgebaut sind.

7. Verfahren nach einem der vorstehenden Ansprüche
**dadurch gekennzeichnet,**
daß das Kabelsystem vorzugsweise aus symmetrischen 100 Ω - Kabeln ausgebildet ist.

8. Verfahren nach einem der vorstehenden Ansprüche,
**dadurch gekennzeichnet,**
daß dem Kabelsystem über die Abschlußvorrichtungen (ZAD) Informationen bezüglich Zustand und/oder Zustandsänderungen von häuslichen Einrichtungen zugeführt werden.
